(19) Europäisches Patentamt
European Patent Office
Office européen des brevets

(11) Veröffentlichungsnummer: **0 250 396**
**B1**

(12) # EUROPÄISCHE PATENTSCHRIFT

(45) Veröffentlichungstag der Patentschrift: **08.02.89**

(51) Int. Cl.⁴: **C 08 G 63/68**, D 06 M 15/507

(21) Anmeldenummer: **85902527.2**

(22) Anmeldetag: **17.05.85**

(86) Internationale Anmeldenummer: **PCT/EP 85/00233**

(87) Internationale Veröffentlichungsnummer: **WO 86/06735 (20.11.86** Gazette **86/25)**

(54) **IN WASSER LÖSLICHE POLYMISCHESTER, VERFAHREN ZU IHRER HERSTELLUNG UND IHRE VERWENDUNG.**

(43) Veröffentlichungstag der Anmeldung: **07.01.88 Patentblatt 88/1**

(45) Bekanntmachung des Hinweises auf die Patenterteilung: **08.02.89 Patentblatt 89/6**

(84) Benannte Vertragsstaaten: **CH FR GB IT LI**

(56) Entgegenhaltungen:
**EP-A- 0 066 944**
**DE-A- 2 438 379**

(73) Patentinhaber: **CASSELLA Aktiengesellschaft, Hanauer Landstrasse 526, D-6000 Frankfurt am Main 61 (DE)**

(72) Erfinder: **ENGELHARDT, Friedrich, Hünfelder Strasse 20, D-6000 Frankfurt am Main 61 (DE)**
Erfinder: **HINTERMEIER, Karl, Hünfelder Strasse 18, D-6000 Frankfurt am Main 61 (DE)**
Erfinder: **KLEBER, Rolf, Am Trieb 41, D-6078 Neu Isenburg (DE)**
Erfinder: **KLEIN, Peter, Fasanenweg 13, D-6200 Wiesbaden (DE)**

(74) Vertreter: **Urbach, Hans-Georg, Dr. et al, Hanauer Landstrasse 526, D-6000 Frankfurt am Main 61 (DE)**
Vertreter: **Euchner, Hans, Hanauer Landstrasse 526, D-6000 Frankfurt am Main 61 (DE)**

**EP 0 250 396 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Polyester und ihre Herstellung durch Kondensation von Glykolen mit Dicarbonsäuren und Dicarbonsäureestern sind bereits in grosser Zahl beschrieben worden und haben zum Teil grosse Verbreitung gefunden. So werden z.B. Polyester, die im wesentlichen aus Terephthalsäure und Ethylenglykol erhalten werden, als Fasermaterial benutzt.

Es ist auch bereits bekannt, in Analogie zu den sauer modifizierten Polyacrylnitrilfasern, sauer modifizierte Polyesterfasern herzustellen, die sich mit basischen Farbstoffen leicht und in tiefen Tönen färben lassen. So werden in den US-Patentschriften 3018272, 3164566, 3164567, 3166531 faserbildende Polymischester beschrieben, die im Molekül in statistischer Verteilung einen geringen Gehalt an Sulfogruppen aufweisen, die an Phenylkerne gebunden sind. Solche Produkte können beispielsweise erhalten werden, wenn ein geringer Teil der verwendeten Dicarbonsäure durch Sulfoterephthalsäure oder Sulfoisophthalsäure ersetzt wird.

Die vorstehend erwähnten Polyester sind unlöslich in Wasser. Es sind auch bereits in Wasser lösliche oder in Wasser leicht dispergierbare Polyester bekannt, die z.B. als Schlichtemittel für Polyestergarne eingesetzt werden.

Die Verarbeitung textiler Fäden zu Textilgut durch Verweben ist praktisch nur möglich, wenn das Kettgarn vor dem Verweben mit einem Schlichtemittel behandelt wird, das die Aufgabe hat, die Fäden bei den hohen mechanischen Beanspruchungen des Webens glatter, geschmeidiger, widerstandsfähiger und geschlossener zu machen und damit den Webvorgang zu erleichtern und Fadenbrüche und Fadenabrieb zu vermindern. Neben den genannten Eigenschaften muss ein gutes Schlichtemittel noch eine Reihe anderer spezieller Eigenschaften aufweisen, damit sein Einsatz nicht zu Betriebsstörungen führt. Beispielsweise darf das Schlichtemittel keinen klebrigen Abrieb an metallischen Fadenführungsorganen ergeben; der geschlichtete Faden soll eine möglichst geringe Metallreibung aufweisen und weder mit anderen geschlichteten Fäden noch mit Apparateteilen verkleben. Das Schlichtemittel soll in ausreichendem Masse in Wasser löslich sein, und die gebrauchsfertige, wässerige Lösung darf keine Hautbildung zeigen, da diese Haut zu hartnäckiger Verschmutzung der Fäden und unangenehmen Betriebsstörungen führt. Die Lösung muss lange Zeit homogen bleiben, damit keine unzulässigen Konzentrationsabweichungen auftreten, und die Stabilität der Lösung muss auch in Gegenwart von Präparationsmitteln, die beim Schlichten präparierter Fäden zwangsläufig in die Schlichtebäder eingeschleppt werden, erhalten bleiben. (Präparationen sind für den störungsfreien Ablauf des Spinnvorgangs unerlässlich und daher auf allen gesponnenen Synthesefasern vorhanden.) Besonders wichtig ist es auch, dass das Textilmaterial nach dem Verweben durch einfaches Spülen oder Waschen vollständig von dem Schlichtemittel befreit werden kann, da dies die Voraussetzung für eine störungsfreie Weiterverarbeitung, wie z.B. für das Färben, ist.

Als Schlichtemittel werden zunehmend Produkte auf der Basis von Polymischestern verwendet. Aus der österreichischen Patentschrift 229040 sind Polymischester aus Dicarbonsäuren, Polyalkylenglykolen mit einem Molgewicht von über 6000 und mehrfunktionellen, aliphatischen Alkoholen bekannt, die in Wasser quellbar oder auch bis zu einem gewissen Grad löslich sind. Diese Produkte sollen u.a. als Schlichtemittel eingesetzt werden. Hierbei ergeben diese Produkte jedoch nicht den gewünschten guten Fadenschluss und sind mit den üblichen Präparationen unverträglich. Sie haben ferner den Nachteil, dass sie sich nicht ohne grossen Aufwand in Lösung bringen lassen. Auch zeigen Lösungen dieser Produkte bereits in sehr geringer Konzentration ausserordentlich hohe Viskositäten.

In der deutschen Auslegungsschrift 1816163 wird ein Verfahren zur Herstellung von in Wasser löslichen linearen Polyestern beschrieben, bei dem a) Dicarbonsäuren, b) Diole und c) Dicarbonsäuren oder Diole mit jeweils einem an einem aromatischen Ring befindlichen Sulfon- oder Sulfonat-Rest bis zu einer Eigenviskosität von mindestens 0,3 kondensiert werden, wobei die Diolkomponente b) mindestens zu 20 Mol-% aus einem bestimmten Polyethylenglykol besteht und die Komponente c) 8 bis 45 Mol-% der Dicarbonsäure- oder Diolkomponente ausmacht. Die Polyester werden als Schlichtemittel verwendet.

Aus der deutschen Patentschrift 2438379 sind in Wasser lösliche oder leicht dispergierbare Polymischester bekannt, bei denen die Dicarbonsäurereste zu 26 bis 90 Mol-% aus Phenylenresten, zu 10 bis 25 Mol-% aus Resten der 4- oder 5-Sulfopropoxy-isophthalsäure oder Sulfopropoxy-terephthalsäure und zu 0 bis 49 Mol-% aus Alkylenresten mit 1 bis 6 C-Atomen und/oder Cyclohexylenresten und die Diolreste zu 51 bis 100 Mol-% aus Diethylenglykolresten, zu 0 bis 49 Mol-% aus Alkylenresten mit 2 bis 6 C-Atomen oder Resten der Formel

$$-CH_2-CH(CH_3)-O-CH_2-CH(CH_3)-,$$

zu 0 bis 20 Mol-% aus Polyoxyethylenresten mit einem mittleren Molekulargewicht von 116 bis 600 und zu 0 bis 10 Mol-% aus Polyoxyethylenresten mit einem mittleren Molekulargewicht von 600 bis 2000 bestehen. Diese Polymischester, die ein scheinbares mittleres Molekulargewicht zwischen 1000 und 3000 besitzen, werden als Schlichtemittel für Polyesterfasergarne und Polyesterfilamentgarne verwendet.

Es wurde nun überraschenderweise gefunden, dass die erfindungsgemässen Polymischester gegenüber den bisher bekannten Schlichtemitteln auf der Basis von Polymischestern weiter verbesserte Schlichteeigenschaften und eine verbesserte Handhabung besitzen. So besitzen sie z.B. eine geringere Klebrigkeit und eine höhere Elastizität der Schlichtefilme, die eine höhere Biegesteife der geschlichteten Garne bewirkt, erfordern einen geringeren Gesamtauftrag, bilden beim Stehen keine Haut, werden beim Verdünnen auch von hartem Leitungswasser nicht ausgefällt und lassen sich leicht aus der Schlichtewanne und von der geschlichteten Ware entfernen.

Die Erfindung betrifft in Wasser lösliche Polymischester mit einem Fliesspunkt zwischen 220 und 280° C der allgemeinen Formel I

$$E-CO-R-CO\!-\!(O^1-O-CO-R-CO)_n\!-\!E^1 \quad (1)$$

worin R im statistischen Mittel zu 60 bis 85 Mol-% aus 1,3-Phenylenresten, zu 5 bis 20 Mol-% aus Tetramethylenresten und zu 10 bis 20 Mol-% aus Resten der Formeln IIa und/oder IIb

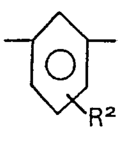
(IIa)
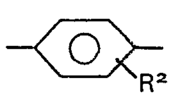
(IIb)

besteht,

$R^1$ im statistischen Mittel zu 60 bis 95 Mol-% aus Ethylenresten ($-CH_2CH_2-$), zu 0 bis 28 Mol-% aus 2,2-Dimethyl-1,3-propylenresten und zu 5 bis 12 Mol-% aus Polyoxyethylenresten mit einem mittleren Molekulargewicht bis 600 besteht, und

$R^2 = SO_3M$ oder $-OCH_2CH_2CH_2SO_3M$,

E, $E^1 = -OM$, Alkoxy mit 1 bis 4 C-Atomen oder den Rest $-O-R^1-OH$,

M ein Proton, ein Alkalimetallkation oder Ammoniumion bedeuten, und

n eine so grosse Zahl ist, dass der Polymischester ein mittleres Molekulargewicht zwischen 15 000 und 40 000 besitzt, wobei die Summe der vorhandenen Dicarbonsäurereste R 100 Mol-% und die Summe der Diolreste $R^1$, bezogen auf die Summe der Reste R, 100-105 Mol-% betragen.

Die Erfindung betrifft auch ein Verfahren zur Herstellung der Polyester und ihre Verwendung als Schlichtemittel.

Bevorzugte Polymischester sind solche, bei denen R im statistischen Mittel zu 60 bis 80 Mol-% aus 1,3-Phenylenresten, 10 bis 20 Mol-% aus Tetramethylenresten und 10 bis 20 Mol-% aus Resten der Formel IIa besteht.

Ferner sind bevorzugte Polymischester solche, bei denen $R^1$ im statistischen Mittel zu 68 bis 90 Mol-% aus Ethylenresten ($-CH_2-CH_2-$), zu 5 bis 20 Mol-% aus 2,2-Dimethyl-1,3-propylenresten und zu 5 bis 10 Mol-% aus Polyoxyethylenresten mit einem mittleren Molekulargewicht bis 600 besteht.

Bevorzugt sind auch Polymischester mit einem Molekulargewicht zwischen 20 000 und 40 000. Die erfindungsgemässen Polymischester besitzen vorzugsweise einen Fliesspunkt zwischen 230 bis 270° C. Ganz besonders bevorzugte Polymischester sind solche, die mehrere oder insbesondere alle genannten bevorzugten Merkmale besitzen.

Die im Polymischester für R eingebauten 1,3-Phenylenreste sind Reste der Isophthalsäure; die für R eingebauten Tetramethylenreste sind Reste der Adipinsäure; die für R eingebauten Reste der Formeln IIa und IIb sind Reste von Isophthal- bzw. Terephthalsäuren, die im Kern durch eine Sulfogruppe oder eine Sulfopropoxygruppe, gegebenenfalls in Form eines Alkali- oder Ammoniumsalzes, substituiert sind.

Die im Polymischester für $R^1$ eingebauten Ethylenreste sind Reste des Ethylenglykols, die für $R^1$ eingebauten 2,2-Dimethyl-1,3-propylenreste sind Reste des Neopentylglykols (= 2,2-Dimethyl-propan-1,3-diols). Die für $R^1$ eingebauten Polyoxyethylenreste mit einem mittleren Molekulargewicht bis 600 besitzen die Formel III

$$-CH_2CH_2O\!-\!(CH_2CH_2O)_m\!-\!CH_2CH_2- \quad (III)$$

und leiten sich von Polyethylenglykolen der Formel IV

$$HOCH_2CH_2O\!-\!(CH_2CH_2O)_m\!-\!CH_2CH_2OH \quad (IV)$$

ab, wobei m eine Zahl von 0 bis 12 ist, so dass sich für die Reste der Formel III bzw. die Verbindungen der Formel IV ein mittleres Molekulargewicht bis ca. 600 ergibt. Von den Polyethylenglykolen der Formel IV sind z.B. Diethylenglykol, Triethylenglykol, Tetraethylenglykol und höhere Polyethylenglykole mit mittleren Molekulargewichten von 300, 400 und 600 (abgekürzt PEG 300, PEG 400, PEG 600) handelsüblich. Die Angabe eines mittleren Molekulargewichts weist darauf hin, dass die Polyethylenglykole, wie andere hochpolymere Substanzen auch, und z.B. auch die erfindungsgemässen Polymischester keine ganz einheitlichen Verbindungen, sondern Gemische einander sehr ähnlicher Polymerhomologer sind. Beispielsweise enthält ein handelsübliches Polyethylenglykol 400, Polymerhomologe mit Molgewichten von 380 bis 420. Wegen dieser Schwankungsbreite erscheint es auch zulässig, für den sich von einem Polyethylenglykol der Formel IV mit einem bestimmten Wert für m ableitenden Rest der Formel III das gleiche Molekulargewicht anzugeben, obwohl sich für den Rest III theoretisch ein um 34 niedrigeres Molekulargewicht ergibt.

In den erfindungsgemässen Polymischestern können als Reste $R^1$ auch Reste verschiedener Polyethylenglykole in statistischer Verteilung vorliegen. So können z.B. 10 Mol-% der Reste $R^1$ aus 5 Mol-% Resten des PEG 400 und 5 Mol-% PEG 600 bestehen; oder z.B. 10 Mol-% der Reste $R^1$ können aus 3 Mol-% Resten des Diethylenglykols, 3 Mol-% Resten des Triethylenglykols und 4 Mol-% Resten des PEG 400 bestehen.

Die Reste E und $E^1$ können die gleiche Bedeutung oder verschiedene Bedeutungen besitzen. M bedeutet ein Proton, das Ammoniumion, ein Alkalikation, wie z.B. das Lithium-, Natrium- oder Kaliumkation. Für M ist das Natriumkation bevorzugt.

Die Summe der in den erfindungsgemässen Polymischestern vorhandenen Dicarbonsäurereste R beträgt 100 Mol-%. Die Summe der Diolreste $R^1$, bezogen auf die Summe der Reste R, beträgt 100 bis 105 Mol-%.

Die erfindungsgemässen Polymischester werden dadurch hergestellt, dass man 100 Mol-% einer Dicarbonsäurekomponente, bestehend aus 60 bis 85 Mol-%, vorzugsweise 60 bis 80 Mol-%, Isophthalsäure und/oder ihren niederen Alkylestern, 5 bis 20 Mol-%, vorzugsweise 10 bis 20 Mol-%, Adipinsäure und/oder ihren niederen Alkylestern, und 10 bis 20 Mol-% einer im Kern durch $R^3$ substituierten Isophthalsäure der Formel Va und/oder einer im Kern durch $R^3$ substituierten Terephthalsäure der Formel Vb

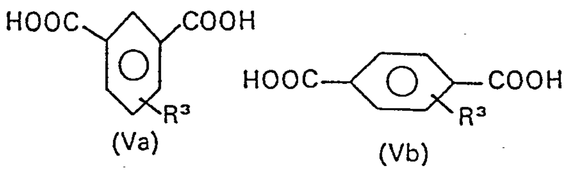

(Va) (Vb)

worin

$R^3 = -SO_3M^1$ oder $-OCH_2CH_2CH_2SO_3M^1$

und $M^1$ ein Alkalimetallkation bedeuten, und/oder ihren niederen Alkylestern, vorzugsweise 10 bis 20 Mol-% der Isophthalsäure der Formel Va und/oder ihren niederen Alkylestern, mit (bezogen auf 100 Mol-% Dicarbonsäurekomponente) 120 bis 265 Mol-%, vorzugsweise 140 bis 230 Mol-%, einer Diolkomponente, bestehend aus (bezogen auf 100 Mol-% Dicarbonsäurekomponente) 115 bis 225 Mol-%, vorzugsweise 130 bis 190 Mol-%, Ethylenglykol, 0 bis 28 Mol-%, vorzugsweise 5 bis 25 Mol-%, Neopentylglykol und 1 bis 12 Mol-%, vorzugsweise 5 bis 10 Mol-% eines oder mehrerer Polyethylenglykole der Formel IV bei Temperaturen bis 200° C, vorzugsweise 235° C, verestert oder umestert und anschliessend bei Temperaturen bis 300° C polykondensiert, bis der entstandene Polymischester ein mittleres Molekulargewicht von 15000 bis 40000, vorzugsweise 20000 bis 40000, aufweist.

Das Alkalikation $M^1$ ist z.B. das Kaliumkation, vorzugsweise aber das Natriumkation.

Die Angabe „120 bis 265 Mol-% einer Diolkomponente" und die Molprozentangaben für die Komponenten der Diolkomponente beziehen sich dabei auf die 100 Mol-% der Dicarbonsäurekomponente. Vorzugsweise werden bei der Herstellung der Polymischester, bezogen auf 100 Mol-% der Dicarbonsäurekomponente, 140 bis 230 Mol-% der Diolkomponente eingesetzt. Aus den Zahlenangaben ergibt sich, dass die Diolkomponente im Überschuss eingesetzt wird. Der Überschuss der Diolkomponente ist durch überschüssiges Ethylenglykol bedingt, das bei der Kondensation grösstenteils unverändert abdestilliert und regeneriert werden kann.

Als Monomeren der Dicarbonsäurekomponente kommen neben Isophthalsäure und Adipinsäure die Monoalkalisalze, insbesondere die Mononatriumsalze der 4-Sulfo-isophthalsäure, der 5-Sulfo-isophthalsäure, der 4-Sulfopropoxyisophthalsäure, der 5-Sulfopropoxyisophthalsäure, der 2-Sulfo-terephthalsäure und der 2-Sulfopropoxy-terephthalsäure, sowie die Ester der genannten Dicarbonsäuren mit niederen Alkoholen, d.h. mit Alkoholen mit 1 bis 4 C-Atomen, in Betracht.

Die Diolkomponente besteht aus Ethylenglykol, in der Regel Neopentylglykol, und einem oder mehreren Polyethylenglykolen der Formel IV.

Die Herstellung der Polymischester verläuft in zwei Phasen. In der ersten Reaktionsphase werden die Verbindungen der Dicarbonsäurekomponente mit den Verbindungen der Diolkomponente überwiegend nur ver- oder umgeestert und die erhaltenen Ester in der zweiten Reaktionsphase polykondensiert. Die Umsetzungen werden in beiden Phasen in der Regel unter Rühren durchgeführt.

Es ist zweckmässig, die in der ersten Phase zwischen der Dicarbonsäure- und der Diolkomponente durchgeführte Ver- oder Umesterung in der Atmosphäre eines Inertgases, wie z.B. Stickstoff, durchzuführen. Auch ist der Zusatz eines geeigneten Veresterungs- oder Umesterungskatalysators zweckmässig. Geeignete Katalysatoren sind z.B. Alkalihydroxide, wie Natrium- oder Kaliumhydroxid, oder Alkalialkoholate, wie Natriummethylat oder -ethylat, Erdalkalioxide oder -hydroxide, wie z.B. die entsprechenden Calcium- oder Magnesiumverbindungen, sowie ferner auch Zink- oder Cadmiumoxid, Salze von organischen Carbonsäuren, wie Natrium-, Calcium-, Mangan- oder Zinkacetat oder -formiat, organische Titanverbindungen, vorzugsweise die Titanalkoholate, wie z.B. insbesondere Titanisopropylat oder Titanbutylat. Die anzuwendenden Mengen sind vor allem von der Wirksamkeit des jeweiligen Katalysators abhängig.

Die Katalysatormenge wird normalerweise so gering wie möglich gehalten. Wenig geeignet sind saure Katalysatoren, weil sie das eingesetzte Ethylenglykol in Dioxan verwandeln und damit weitgehend den Kettenbildungsreaktionen entziehen. Da diese Nebenreaktion auch schon durch eine geringfügige Dissoziation der sulfonsauren Natriumsalze eintreten kann, empfiehlt sich auch bei Verwendung von neutralen Katalysatoren, wie z.B. Titanalkoholaten, eine zusätzliche Abpufferung, z.B. mittels etwas Alkaliacetat, wie z.B. Natriumacetat, oder Alkalialkoholat, wie z.B. Natriummethylat. Bei der Veresterungs- bzw. Umesterungsphase wird das Reaktionsgemisch auf Temperaturen bis 200° C, vorzugsweise 235° C, aufgeheizt, wobei als Destillat Wasser und/oder niedere Alkohole entweichen. Anhand der aufgefangenen Destillatmenge kann der Verlauf der Veresterung bzw. Umesterung verfolgt werden.

Am Ende der ersten Reaktionsphase liegt ein Brei aus einem Estergemisch vor, in dem überwiegend Ester vorhanden sind, die aus einem Rest einer Dicarbonsäure und zwei Resten eines Diols bestehen. Dieses Estergemisch wird in der zweiten Reaktionsphase zu einem Polymischester polykondensiert. Hierzu wird das Reaktionsgemisch, vorzugsweise in einem Inertgas, wie Stickstoff, auf höhere Temperaturen als in der ersten Reaktionsphase, in der Regel auf Temperaturen von 210 bis 300° C, vorzugsweise auf 260 bis 285° C, aufgeheizt und dann unter vermindertem Druck von z.B. 0,1 bis 50 mbar bis zu einem mittleren Molekulargewicht von 15000 bis 40000, vorzugsweise 20000 bis 40000, polykondensiert. Zweckmässigerweise wird der Druck dabei zunächst auf ca. 10 bis 15 mbar und nach einiger Zeit auf 0,5 bis 5 mbar erniedrigt. Die Polykondensation kann ohne oder vorzugsweise mit Katalysator durchgeführt werden. Als Kondensationskatalysator hat sich z.B. Antimontrioxid ohne oder mit Zusatz von etwas phosphoriger Säure bewährt.

Während der Polymerisation wird vor allem aus den Bisglykolestern Ethylenglykol, teilweise in Form von Zersetzungsprodukten, abgespalten. Von der Dicarbonsäurekomponente werden 100 Mol-% Reste in den Polymischester eingebaut; von den eingesetzten Verbindungen der Diolkomponente werden jedoch nur zwischen 100 bis 105 Mol-% Reste in den Polymischester eingebaut, darunter praktisch alle Reste des eingesetzten Polyethylenglykols der Formel IV.

Die Veresterungs- oder Umesterungsphase und die Kondensationsphase sind nicht immer scharf voneinander zu trennen, sondern gehen häufig ineinander über. Die Umesterungs- oder Veresterungsphase kann auch schon bei Temperaturen von 170 bis 200° C beendet sein. Die Kondensationsphase beginnt dann bei den daran nach oben anschliessenden Temperaturen.

Es ist zumeist vorteilhaft, zu Beginn der Veresterungs- oder Umesterungsphase nicht die gesamte, sondern nur den veresterten Teil der Dicarbonsäurekomponente einzusetzen und den unveresterten Rest der Dicarbonsäurekomponente gegen Ende oder nach beendeter Veresterungs- oder Umesterungsphase zuzusetzen, d.h. z.B. dann, wenn die Temperatur über 170 bis 200° C gesteigert wird.

Die Kondensationsphase kann häufig bei maximalen Temperaturen von 260 bis 285° C, in manchen Fällen jedoch auch bei maximalen Temperaturen von 240 bis 260° C, abgeschlossen werden.

Das mittlere Molekulargewicht wird nach der Endgruppenanalyse nach folgender Formel

$$\text{mittleres Molekulargewicht} = \frac{112.200}{\text{Säurezahl} + \text{Hydroxylzahl}}$$

berechnet. Wenn das angegebene mittlere Molekulargewicht erreicht ist, besitzt der Polymischester einen Fliesspunkt von 220 bis 280° C, vorzugsweise 230 bis 270° C. (Die Bestimmungsmethode für den Fliesspunkt ist in Beispiel 1 angegeben.) Bei den angegebenen Fliesspunkten sind die erfindungsgemässen Polymischester jedoch keinesfalls dünnflüssig. So kann z.B. ein in einem Glaskolben bei 280° C auskondensierter Polymischester bei der genannten Temperatur in dem Kolben auf den Kopf gestellt werden, ohne dabei wesentliche Fliessbewegungen zu zeigen.

Zur Bestimmung des mittleren Molekulargewichts während der Kondensation brauchen nicht immer Säurezahl- und Hydroxylzahlbestimmungen durchgeführt zu werden, weil man normalerweise den Kondensationsgrad nach vorheriger Eichung auch am Verlauf von Hilfsparametern, z.B. der Viskosität, verfolgen kann. Die Viskosität ihrerseits kann z.B. durch den Widerstand gemessen werden, den der Rührer bei seiner Drehbewegung im Reaktionsgefäss erleidet.

Nach beendeter Polykondensation erhält man die Polymischester in Form von hellen, schwach gelb oder schwach bernsteinfarben gefärbten Schmelzen, die noch warm in flüssiger Form oder nach dem Erstarren und Zerkleinern leicht in Wasser aufgelöst werden können. In der Regel wird der pH-Wert der Lösungen mit etwas Alkalilauge, z.B. Natron- oder Kalilauge, oder mit Ammoniaklösung etwa auf den Neutralpunkt eingestellt. Dabei werden im Polymischester noch vorhandene Protonen durch Alkalimetallkationen bzw. Ammoniumionen ersetzt. Alkalimetallkationenfreie Polymischester können erhalten werden, wenn man eine wässerige Lösung des Polymischesters mit einem Kationenaustauscher in der Säureform behandelt und die Lösung weiterverwendet oder gewünschtenfalls zur Gewinnung der Polymischester eindampft. Die erhaltenen wässerigen Lösungen sind, gegebenenfalls nach Abfiltration geringer Trübungen, klar.

Die erfindungsgemässen Polymischester eignen sich in Form ihrer wässerigen, vorzugsweise neutral oder annähernd neutral gestellten Lösungen hervorragend als Schlichtemittel, z.B. für natürliche oder synthetische Fasergarne, insbesondere aber für Filamentgarne aus synthetischen Fäden eingesetzt. Dabei handelt es sich um glatte oder auch um texturierte Garne aus z.B. Polyestern, Polypropylen, Polyacrylnitril, Polyamid-6,6.

Die erfindungsgemässen Polymischester eignen sich besonders als Schlichtemittel für Fasergarne oder insbesondere Filamentgarne aus Polyester, insbesondere aus Polyethylenterephthalat.

Es war überraschend, dass die Schlichteeigenschaften der erfindungsgemäss hergestellten Polymischester gegenüber bekannten Schlichtemitteln auf der Basis von Polyestern noch verbessert werden konnten, insbesondere hinsichtlich einer geringeren Elektrolytempfindlichkeit, einer geringeren Anwendungsmenge, einer besseren Filmelastizität und einer besseren und leichteren Auswaschbarkeit. Die mit den erfindungsgemäss hergestellten Polymischestern geschlichteten Fäden zeigen z.B. einen sehr guten Fadenschluss und eine hohe Biegesteife selbst bei sehr geringem Schlichteauftrag, weisen beim Weben keinen klebrigen und nur minimalen staubigen Abrieb auf, bilden keine oder wenig Flusen, Schiebeflusen und Fadenbrüche und verkleben weder miteinander noch mit dem Webriet. Sie zeigen ausgezeichnete Laufeigenschaften in der Weberei, verbunden mit hohen Webereinutzeffekten. Die Schlichtelösungen bilden beim Stehen an der Luft keine Haut und sind anstandslos mit Wasser verdünnbar. Sie sind auch stabil gegen Präparationen, die sich bereits auf den Fäden befinden. Vorteilhaft ist, dass die erfindungsgemässen Schlichten nicht schäumen. Die Schlichtemittel haften gut auf den Substraten, lassen sich aber nach dem Weben der geschlichteten Fäden durch einfaches Waschen rückstandslos entfernen.

Die Konzentration der erfindungsgemäss hergestellten Polymischester in den wässerigen

Schlichtelösungen beträgt 4 bis 10 Gewichtsprozent. Je nach der vom Faden gehaltenen Schlichtelösung ergeben sich nach dem Trocknen Auflagen des Schlichtemittels zwischen 1 und 6 Gewichtsprozent, bezogen auf das Fadengewicht.

Im allgemeinen werden die Konzentration der Schlichtelösung und die vom Faden aufgenommene Menge so abgestimmt, dass auf glatten Filamentgarnen 1,5 bis 4,5, vorzugsweise 2 bis 3 Gewichtsprozent, auf texturierten Filamentgarnen 2 bis 6, vorzugsweise 3 bis 5 Gewichtsprozent an Schlichte aufgenommen werden.

Nach dem Imprägnieren der Garne mit den Schlichtelösungen werden die Garne bei Temperaturen von 105 bis 160° C getrocknet. Die Filmhärte des Schlichteauftrags kann durch Variation der Ausgangsmaterialien weitgehend variiert werden: Erhöhung des Gehalts an Isophthalsäure bzw. Neopentylglykol machen die Schlichte härter, Erhöhung des Gehalts an Adipinsäure bzw. Polyethylenglykol weicher.

Die nachfolgenden Beispiele dienen zur weiteren Erläuterung der Erfindung. Prozente bedeuten dabei, sofern nichts anderes angegeben, Gewichtsprozente.

In den Beispielen werden folgende Abkürzungen benutzt:

SIM = Natriumsalz des 5-Sulfo-isophthalsäuredimethylesters
SIA = Mononatriumsalz der 5-Sulfo-isophthalsäure
SPO = Natriumsalz des 5-Sulfopropoxy-isophthal-dimethylesters
STM = Natriumsalz des 2-Sulfotherephthalsäure-dimethylesters
IPA = Isophthalsäure 99%ig
DMI = Isophthalsäure-dimethylester
ADS = Adipinsäure
ADSM = Adipinsäuredimethylester
DEG = Diethylenglykol
TEG = Triethylenglykol
PEG = Polyethylenglykol (die Zahl dahinter gibt das mittlere Molekulargewicht an)
MEG = Monoethylenglykol
NEO = Neopentylglykol = 2,2'-Dimethyl-propandiol-1,3
TIPR = Titan-tetraisopropylat
TIBU = Titantetrabutylat

*Beispiel 1:*

(17,5 Mol-% SIM, 67,5 Mol-% IPA, 15 Mol-% ADS, 180 Mol-% MEG, 20 Mol-% NEO, 5 Mol-% PEG 300, 5 Mol-% PEG 600)

In einem 2-Liter-Schliffvierhalskolben mit Rührer, Thermometer, Gaseinleitungsrohr für Stickstoff, Vigreuxkolonne und absteigendem Kühler auf der Vigreuxkolonne werden 223,2 g MEG (= 3,6 mol), 30 g PEG (= 0,1 mol), 60 g geschmolzenes PEG 600 (= 0,1 mol) und 2,4 g einer 5%igen Lösung von TIPR im Isopropanol gut verrührt, dann 41,6 g NEO (= 0,4 mol), 103,6 g SIM (= 0,35 mol) und 0,5 g Natrium-methylat dazugemischt.

Die Apparatur wird evakuiert und mit Stickstoff gefüllt. Unter Rühren und Überleiten eines mässigen Stickstoffstroms heizt man in 45 min bis 175° C und im weiteren 45 min bis 190° C Innentemperatur, wobei ca. 18 g Methanol in der Vorlage aufgefangen werden.

Nun werden 224,1 g IPA (= 1,35 mol) und 43,8 g ADS (= 0,3 mol) nachgesetzt und wie folgt weitergeheizt: in 1 h bis 210° C, in 1 h bis 220° C, in 1 h bis 230° C, 1 h bei 230° C. Das Destillat besteht in dieser Phase überwiegend aus Kondensationswasser. Nun wird die Vigreuxkolonne ausgebaut, 0,1 g $Sb_2O_3$ zugesetzt und die Kolonne durch einen absteigenden Kühler ersetzt. Dann wird die Kondensationstemperatur in 45 min bis 280° C gesteigert und 30 min bei 280 bis 285° C gehalten. Dann wird Vakuum angelegt und die Kondensation noch 30 min bei einem Vakuum bis ca. 20 mbar weitere 30 min bei einem Vakuum bis ca. 2 mbar fortgesetzt. Das Destillat besteht in dieser Phase überwiegend aus Ethylenglykol.

Man erhält 511 g einer hellen Schmelze, die mit enthärtetem Wasser und etwas n-Natronlauge auf 1703 g zu einer 30%igen, neutralen, meist klaren Lösung eingestellt wird. Falls die Lösung trüb anfällt oder nachtrübt, kann sie leicht durch Verrühren mit 1 bis 2% eines geeigneten Filtriermittels, z.B. Kieselgur oder Celite J2, und Abpressen über ein Druckfilter restlos geklärt werden.

Der erhaltene Polymischester besitzt folgende Parameter: Fliesspunkt: 230 bis 235° C, mittleres Molekulargewicht: 16 000.

Der Fliesspunkt wird wie folgt bestimmt: Zwischen zwei Mikroskopierdeckplättchen wird eine 3 mm × 3 mm × 0,5 mm grosse Probe des Polyesterfilmes gelegt und auf einer Kofler-Heizbank langsam erwärmt. Dabei wird versucht, das obere Deckplättchen von Hand mit einem hölzernen Zahnstocher oder Streichholz zu verschieben. Die Temperatur, bei der das obere Deckplättchen verschoben werden kann, ist der Fliesspunkt.

*Beispiel 2:*

Wenn man in Beispiel 1 anstelle von 15 Mol-% ADS nur 14,6 g = 5 Mol-% einsetzt und dafür den Anteil der IPA von 67,5 Mol-% auf 77,5 Mol-% = 257,3 g erhöht, erhält man bei sonst gleicher Arbeitsweise einen Polymischester, der eine härtere Schlichte liefert.

Der erhaltene Polymischester besitzt folgende Parameter: Fliesspunkt: 235 bis 240° C, mittleres Molekulargewicht: 22 400.

*Beispiel 3:*

(17,5 Mol-% STM, 15 Mol-% ADS, 67,5 Mol-% IPA, 150 Mol-% MEG, 20 Mol-% NEO, 11 Mol-% PEG 400)

In der gleichen Apparatur, wie in Beispiel 1 beschrieben, werden 186 g MEG (= 3 mol), 80 g PEG 400 (= 0,22 mol) und 2,4 g einer 5%igen Lösung von TIPR in Methanol gut verrührt, 41,6 g NEO (= 0,4 mol), 103,6 g STM (= 0,35 mol) und 1 g Natriumacetat dazugemischt.

Die Apparatur wird evakuiert und mit Stickstoff gefüllt. Unter Rühren und Überleiten eines mässigen Stickstoffstroms heizt man in 45 min bis 175° C und im weiteren 45 min bis 190° C Innentemperatur, wobei ca. 18 g Methanol in der Vorlage aufgefangen werden. Es werden nun 224,1 g IPA (= 1,35 mol) und 43,8 g ADS (= 0,3 mol) nachgesetzt und wie folgt weitergeheizt: in 1 h bis 210° C, in 1 h bis 220° C, in 1 h bis 230° C, 1 h bei 230° C. Das Destillat besteht in dieser Phase überwiegend aus Kondensationswasser. Nun wird die Vigreuxkolonne ausgebaut und der absteigende Kühler direkt auf den entsprechenden Schliff des Vierhalskolbens gesetzt. Dann wird die Kondensationstemperatur in 45 min bis 280° C gesteigert und 30 min bei 280 bis 285° C gehalten. Nun wird Vakuum angelegt und die Kondensation noch 30 min bei einem Vakuum bis ca. 20 mbar weitere 30 min bei einem Vakuum bis ca. 2 mbar fortgesetzt. Das Destillat besteht in dieser Phase überwiegend aus Ethylenglykol.

Man erhält 506 g helle Schmelze, die mit enthärtetem Wasser und etwas n-Natronlauge auf 1687 g zu einer 30%igen, neutralen, meist klaren Lösung eingestellt wird. Falls die Lösung trüb anfällt oder beim Lagern nachtrübt, kann sie leicht durch Verrühren mit 1 bis 2% eines geeigneten Filtrierhilfsmittels, z.B. Kieselgur oder Celite, und Abpressen über ein Druckfilter restlos geklärt werden.

Der erhaltene Polymischester besitzt folgende Parameter: Fliesspunkt: 245 bis 250° C, mittleres Molekulargewicht: 28 300.

*Beispiel 4:*

(12,5 Mol-% SIA, 75 Mol-% IPA, 12,5 Mol-% ADS, 170 Mol-% MEG, 20 Mol-% NEO, 10 Mol-% PEG 300)

In der gleichen Apparatur, wie in Beispiel 1 beschrieben, werden 210,8 g MEG (= 3,4 mol), 60 g PEG 300 (= 0,2 mol) und 2,4 g einer 5%igen TIPR-Lösung (in Methanol) kurz verrührt, dann 66 g SIA (= 0,25 mol), 41,6 g NEO (= 0,4 mol), 249 g IPA (1,5 mol), 36,5 g ADS (= 0,25 mol) und 2 g Natriumacetat dazugemischt.

Die Apparatur wird evakuiert und mit Stickstoff gefüllt. Unter Rühren und Überleiten von Stickstoff wird dann im Laufe von 45 min auf 170° C, im Laufe von weiteren 45 min bis 195° C geheizt. Die Reaktionstemperatur wird in 1 h auf 210° C und in einer weiteren h auf 220° C gesteigert. Zwischen 170 und 220° C werden fast 100 g Destillat, überwiegend Wasser, in der Vorlage aufgefangen. Man heizt in einer weiteren Stunde bis 230° C, dann 4 h auf 230 bis 235° C. Dann wird die Vigreuxkolonne ausgebaut, 0,1 g $Sb_2O_3$ zugesetzt und der absteigende Kühler direkt auf den entsprechenden Schliff des Vierhalskolbens gesetzt.

Anschliessend wird Vakuum angelegt und 4 h bei 230 bis 235° C bei 10 bis 20 mbar geheizt. Die Temperatur wird bis 270° C gesteigert und dann weitere 2 h bei 270 bis 275° C und 1 bis 4 mbar kondensiert. In dieser Phase werden ca. 87 g Destillat, überwiegend Ethylenglykol, in der Vorlage aufgefangen.

Man erhält 446 g helle Schmelze, die mit 1038 g destilliertem Wasser und 3 ml n-Natronlauge auf 1483 g einer hellen, 30%igen, meist trüben Lösung vom pH ca. 6,5 verdünnt wird. Sie wird zweckmässig mit 1 bis 2% eines geeigneten Filtrierhilfsmittels, z.B. Perlite-Filtrierhilfsmittel, verrührt und über ein Druckfilter abgepresst. Man erhält so eine wasserklare Lösung.

Der erhaltene Polymischester besitzt folgende Parameter: Fliesspunkt: 240 bis 250° C, mittleres Molekulargewicht: 20 200.

*Beispiel 5:*

Wenn man in Beispiel 4 anstelle von 12,5 Mol-% ADS 58,4 g = 20 Mol-% einsetzt und dafür den Anteil an IPA von 75 auf 67,5 Mol-% = 224,1 g erniedrigt, erhält man bei sonst gleicher Arbeitsweise einen Polyester, der eine weichere Schlichte liefert.

Der erhaltene Polymischester besitzt folgende Parameter: Fliesspunkt: 230 bis 235° C, mittleres Molekulargewicht: 18 800.

*Beispiel 6:*

(12,5 Mol-% SIM, 75 Mol-% IPA, 12,5 Mol-% ADSM, 140 Mol-% MEG, 20 Mol-% NEO, 10 Mol-% PEG 300)

In der gleichen Apparatur, wie in Beispiel 1 beschrieben, werden 173,6 g MEG (= 2,8 mol), 60 g PEG 300 (= 0,2 mol) und 1 g TIPR kurz verrührt, dann 43,5 g ADSM (= 0,25 mol), 74 g SIM (= 0,25 mol), 41,6 g NEO (= 0,4 mol) und 2 g Kalium-tert.-butylat dazugemischt. Die Apparatur wird evakuiert und mit Stickstoff gefüllt. Unter Rühren und Überleiten eines mässigen Stickstoffstroms wird dann im Laufe von 45 min auf 170° C, im Laufe weiterer 45 min auf 195° C Reaktionstemperatur geheizt, wobei ca. 25 g Methanol in der Vorlage aufgefangen werden. Es werden 249 g IPA (= 1,5 mol) nachgesetzt und im Laufe einer Stunde auf 210° C geheizt, dann 4 h bei 210 bis 215° C gehalten. Das Destillat besteht in dieser Phase überwiegend aus Kondensationswasser. Nun wird die Vigreuxkolonne ausgebaut und durch einen absteigenden Kühler ersetzt und Vakuum angelegt. Es wird zunächst 4 h bei 210 bis 215° C und bei 10 bis 20 mbar weiterkondensiert, dann nochmals 4 h bei 250 bis 255° C und 1 bis 4 mbar. Das Destillat besteht in dieser letzten Phase überwiegend aus Ethylenglykol.

Man erhält 470 g helle Schmelze, die mit 1092 g enthärtetem Wasser und ca. 4 ml n-Natronlauge auf 1566 g zu einer 30%igen hellen, aber meist trüben Lösung verdünnt wird. Sie wird deshalb zweckmässig durch Verrühren mit 1 bis 2% eines geeigneten Filtrierhilfsmittels, z.B. Perlite-Filtrierhilfsmittel, und Abpressen über ein Druckfilter geklärt.

Der erhaltene Polymischester besitzt folgende Parameter: Fliesspunkt: 230 bis 235° C, mittleres Molekulargewicht: 16 000.

*Beispiel 7:*

(12,5 Mol-% SIM, 75 Mol-% IPA, 12,5 Mol-% ADS, 150 Mol-% MEG, 20 Mol-% NEO, 10 Mol-% PEG 300)

In der gleichen Apparatur, wie in Beispiel 1 beschrieben, werden 186,8 g MEG (= 3 mol), 60 g PEG 300 (= 0,2 mol) und 2,4 g einer 5%igen Lösung von TIPR in Isopropanol gut verrührt, dann 41,6 g NEO (= 0,4 mol), 74 g SIM (0,25 mol) und 2 g Natriumacetat dazugemischt.

Die Apparatur wird evakuiert und mit Stickstoff gefüllt. Unter Rühren und Überleiten eines mässigen Stickstoffstroms heizt man in 45 min bis 170° C und im weiteren 45 min bis 190° C Innentemperatur, wobei ca. 15 g Methanol in der Vorlage aufgefangen werden.

Es werden nun 249 g IPA (= 1,5 mol) und 36,5 g ADS (= 0,25 mol) nachgesetzt und wie folgt weitergeheizt: in 1 h bis 210° C, in 1 h bis 220° C, in 1 h bis 230° C, 1 h bei 230° C. Das Destillat besteht in dieser Phase überwiegend aus Kondensationswasser. Nun wird die Vigreuxkolonne ausgebaut und durch einen absteigenden Kühler ersetzt. Dann wird die Kondensationstemperatur in 45 min auf 280° C gesteigert und 30 min bei 280 bis 285° C gehalten. Nun wird Vakuum angelegt und die Kondensation noch 30 min bei einem Vakuum bis ca. 20 mbar, weitere 30 min bei einem Vakuum bis ca. 2 mbar fortgesetzt. Das Destillat besteht in dieser Phase überwiegend aus Ethylenglykol.

Man erhält 465 g einer hellen Schmelze, die mit enthärtetem Wasser und etwas n-Natronlauge auf 1550 g zu einer 30%igen neutralen, meist trüben Lösung eingestellt wird. Durch Verrühren mit 1 bis 2% eines geeigneten Filtrierhilfsmittels, z.B. Kieselgur oder Celite J2, und Abpressen über ein Druckfilter kann sie leicht restlos geklärt werden.

Der erhaltene Polymischester besitzt folgende Parameter: Fliesspunkt: 240 bis 245° C, mittleres Molekulargewicht: 34700.

*Beispiel 8:*

(17,5 Mol-% SIM, 67,5 Mol-% IPA, 15 Mol-% ADS, 170 Mol-% MEG, 20 Mol-% NEO, 5 Mol-% PEG 300)

In der gleichen Apparatur, wie in Beispiel 1 beschrieben, werden 210,8 g MEG (= 3,4 mol), 30 g PEG 300 (= 0,1 mol) und 2,4 g einer 5%igen Lösung von TIPR in Methanol gut verrührt. Dann werden 41,6 g NEO (= 0,4 mol), 103,6 g SIM (= 0,35 mol) und 1 g Natriumacetat dazugemischt.

Die Apparatur wird evakuiert und mit Stickstoff gefüllt. Unter Rühren und Überleiten eines mässigen Stickstoffstroms heizt man in 45 min bis 170° C und in weiteren 45 min bis 195° C Innentemperatur, wobei ca. 19 g Methanol in der Vorlage aufgefangen werden.

Es werden nun 224,1 g IPA 99 (= 1,35 mol) und 43,8 g ADS (= 0,3 mol) nachgesetzt und wie folgt weitergeheizt: in 1 h bis 210° C, in 1 h bis 220° C, in 1 h bis 230° C, 1 h bei 230° C. Das Destillat besteht in dieser Phase überwiegend aus Kondensationswasser. Nun wird die Vigreuxkolonne ausgebaut und durch einen absteigenden Kühler ersetzt. Dann wird die Kondensationstemperatur in 45 min bis 280° C gesteigert und 30 min bei 280 bis 285° C gehalten. Nun wird Vakuum angelegt und die Kondensation noch 30 min bei einem Vakuum bis ca. 20 mbar, weitere 30 min bei einem Vakuum bis ca. 2 mbar fortgesetzt. Das Destillat besteht in dieser Phase überwiegend aus Ethylenglykol.

Man erhält 472 g einer hellen Schmelze, die mit enthärtetem Wasser und etwas n-NaOH auf 1573 g zu einer 30%igen neutralen trüben Lösung eingestellt wird. Falls die Lösung trüb anfällt oder nachtrübt, kann sie leicht durch Verrühren mit 1 bis 2% eines geeigneten Filtrierhilfsmittels, z.B. Kieselgur oder Celite J2, und Abpressen über ein Druckfilter restlos geklärt werden.

Der erhaltene Polymischester besitzt folgende Parameter: Fliesspunkt: ca. 265° C, mittleres Molekulargewicht: 26900.

*Beispiel 9:*

(12,5 Mol-% SIM, 75 Mol-% DMI, 12,5 Mol-% ADSM, 170 Mol-% MEG, 10 Mol-% PEG 300)

In der gleichen Apparatur, wie in Beispiel 1 beschrieben, werden 210,8 g MEG (= 3,4 mol), 60 g PEG 300 (= 0,2 mol) und 1 g TIPR gut vermischt. Dann werden 74 g SIM (= 0,25 mol), 291 g DMI (= 1,5 mol), 43,5 g ADSM und 1,5 g Natriumacetat dazugemischt.

Die Apparatur wird evakuiert und mit Stickstoff gefüllt. Unter Rühren und Überleiten eines mässigen Stickstoffstroms heizt man in 45 min bis 175° C und im weiteren 45 min bis 190° C Innentemperatur, wobei ca. 95 g Methanol in der Vorlage aufgefangen werden. Die Temperatur wird dann in 1 h bis 210° C, in 1 h bis 220° C und in einer weiteren h bis 230° C gesteigert, schliesslich 1 h bei 230 bis 235° C gehalten. In dieser Phase werden weitere ca. 15 g Destillat aufgefangen.

Nun wird die Vigreuxkolonne ausgebaut, 0,2 g phosphorige Säure und 0,1 g $Sb_2O_3$ zugesetzt und die Kolonne durch einen absteigenden Kühler ersetzt. Dann wird die Kondensationstemperatur in 45 min bis 270° C gesteigert und 30 min bei 270 bis 275° C gehalten. Nun wird Vakuum angelegt und die Kondensation noch 30 min bei einem Vakuum bis ca. 20 mbar, weitere 30 min bei einem Vakuum bis ca. 2 mbar fortgesetzt. Das Destillat besthet in dieser Phase überwiegend aus Ethylenglykol.

Man erhält 465 g einer hellen Schmelze, die mit enthärtetem Wasser und etwas n-NaOH auf 1550 g zu einer 30%igen, neutralen, meist klaren Lösung eingestellt wird. Falls die Lösung trüb anfällt oder nachtrübt, kann sie leicht durch Verrühren mit 1 bis 2% eines geeigneten Filtrierhilfsmittels, z.B. Kieselgur oder Celite J2, und Abpressen über ein Druckfilter restlos geklärt werden.

Der erhaltene Polymischester besitzt folgende Parameter: Fliesspunkt: 235 bis 245° C, mittleres Molekulargewicht: 22000.

*Beispiel 10:*

Ein ganz ähnliches Produkt wie in Beispiel 9 erhält man, wenn man anstelle von 12,5 Mol-% SIM 12,5 Mol-% SPO einsetzt.

*Beispiel 11:*

(12,5 Mol-% SIM, 75 Mol-% IPA, 12,5 Mol-% ADSM, 140 Mol-% MEG, 20 Mol-% NEO, 3 Mol-% DEG, 3 Mol-% TEG, 5 Mol-% PEG 600)

In der gleichen Apparatur, wie in Beispiel 1 beschrieben, werden 173,6 g MEG (= 2,8 mol), 6,36 g DEG (= 0,06 mol), 9 g TEG (= 0,06 mol), 60 g PEG 600 (= 0,1 mol) und 0,5 g TIBU kurz verrührt, dann 43,5 g ADSM (= 0,25 mol), 74 g SIM (= 0,25 mol), 41,6 g NEO (= 0,4 mol) und 2 g Kaliumtert.-butylat dazugemischt. Die Apparatur wird evakuiert und mit Stickstoff gefüllt. Unter Rühren und Überleiten eines mässigen Stickstoffstroms wird dann im Laufe von 45 min auf 170° C, im Laufe weiterer 45 min auf 195° C Reaktionstemperatur geheizt, wobei ca. 25 g Methanol in der Vorlage aufgefangen werden. Es werden 249 g IPA (= 1,5 mol) nachgesetzt und im Laufe einer Stunde auf 210° C geheizt, dann 4 h bei 210 bis 215° C gehalten. Das Destillat besteht in dieser Phase überwiegend aus Kondensationswasser. Nun wird die Vigreuxkolonne ausgebaut, 0,2 g phosphorige Säure zugesetzt, die Kolonne durch einen absteigenden Kühler ersetzt und Vakuum angelegt. Es wird zunächst 4 h bei 210 bis 215° C und bei 10 bis 20 mbar weiterkondensiert, dann nochmals 4 h bei 250 bis 255° C und 1 bis 4 mbar. Das Destillat besteht in dieser letzten Phase überwiegend aus Ethylenglykol.

Man erhält 481 g helle Schmelze, die mit 1096 g enthärtetem Wasser und ca. 4 ml n-Natronlauge auf 1603 g zu einer ca. 30%igen hellen, aber meist trüben Lösung verdünnt wird. Sie wird deshalb zweckmässig durch Verrühren mit 1 bis 2% eines geeigneten Filtrierhilfsmittels, z.B. Perlite-Filtrierhilfsmittel, und Abpressen über ein Druckfilter geklärt.

Der erhaltene Polymischester besitzt folgende Parameter: Fliesspunkt: 230 bis 235° C, mittleres Molekulargewicht: 15 600.

*Beispiel 12:*

Die nach Beispiel 8 hergestellte 30%ige wässerige Lösung des Polymischesters wird mit enthärtetem Wasser auf 4,5% Feststoffgehalt verdünnt und wie folgt als Schlichtemittel für ein Polyester-Texturiergarn verwendet:

Das Polyester-Texturiergarn von Titer dtex 76 f 20 wird auf einer Breitschlichtemaschine mit einer Geschwindigkeit von 60 m/min durch die 4,5%ige wässerige, auf 55° C erwärmte Lösung des nach Beispiel 7 hergestellten Polyesters geleitet und anschliessend abgequetscht. Die Fadenschar wird dann über ein Aggregat von sieben Heiztrommeln, die auf eine Temperatur von 120° C (Verweilzeit 20 Sekunden) eingestellt sind, geführt. Die getrocknete Fadenschar streicht daraufhin über eine Walze, die in ein 100° C heisses Schmelzwachs aus PEG 6000 eingetaucht und dann auf einem Kettbaum aufgebäumt wird. Der Gesamtauftrag an Schlichtemittel und Nachwachs und Präparation beträgt 3,8%, davon entfallen auf das Schlichtemittel 2,5 bis 2,8%. Die geschlichtete Kette läuft auf dem Webstuhl gut. Störstellen und Abrieb sind weit unterhalb der vorgeschriebenen Grenzen.

*Beispiel 13:*

a) Ein einzelnes, ungedrehtes, luftverwirbeltes Polyester-Filamentgarn vom Titer dtex 50 f 20 wird auf einer Laborschlichtemaschine analog den Bedingungen einer grossen Schlichtemaschine mit der wässerigen Lösung einer Polyesterschlichte gemäss Beispiel 8 geschlichtet. Die Fadengeschwindigkeit beträgt 40 m/min, die Temperatur des Schlichtebades 60° C. Im Luftkanal wird der Faden bei 140° C vorgetrocknet, dann auf 2 Heizgaletten bei 100° C kontaktgetrocknet, auf Biegesteife und Fadenschluss geprüft und einem Abriebtest an einer sich bewegenden Nähnadel unterworfen.

Zur Bestimmung der Biegesteife wird das Drehmoment eines Waagebalkens gemessen, dessen eines Ende auf den 4 mm aus einer Einspannung herausragenden Enden einer aus 10 Fäden bestehenden Fadenschar aufliegt, und dessen anderes Ende mit einem Reiter versehen ist. Der Reiter wird so lange verschoben, bis die Fadenschar nachgibt und der Balken umkippt. Gemessen wird die Verschiebung, d.h. Abstandsänderung des Reiters vom Drehpunkt des Waagebalkens. Es wird ein Mittelwert aus 6 Einzelmessungen angegeben.

Zur Bestimmung des Fadenschlusses wird ein Filament in einer Fadenklemme eingeklemmt und an das Filament 50 cm unterhalb des Einklemmpunktes ein 100-g-Belastungsgewicht angebracht. Dann wird das Filament 20 cm unterhalb des Einklemmpunktes mit einer Schere durchgeschnitten. Durch die plötzliche Entlastung springen die Kapilarfäden auseinander, wenn sie nicht von der Schlichte mehr oder weniger daran gehindert werden. Die nicht aufgespleisste Filamentlänge wird in cm bestimmt und als Fadenschluss angegeben. Es wird ein Mittelwert aus 10 Einzelmessungen angegeben.

Für den Abriebtest an der sich bewegenden Nähnadel wurde der geschlichtete Faden mit einer Fadengeschwindigkeit von 45 m/h durch das Öhr einer sich mit 750 Touren/min und einer Amplitude von 24 mm auf und ab bewegenden Nähnadel Pfaff 100 geführt und der Abrieb nach 3 min Laufzeit in mg gemessen.

b) Unter den gleichen Bedingungen wie in Beispiel 13a) wird ein einzelnes, ungedrehtes, luftverwirbeltes Polyester-Filamentgarn vom Titer dtex 50 mit einer käuflichen Polyesterschlichte aus 90 Mol-% Isophthalsäure, 10 Mol-% Sulfoisophthalsäure und 100 Mol-% Diethylenglykol bei verschiedenen Konzentrationen der Schlichtelösung geschlichtet und das Laufverhalten des geschlichteten Fadens geprüft.

Die Prüfungsergebnisse der gemäss den Beispielen 13a) und 13b) geschlichteten Fäden sind in der folgenden Tabelle gegenübergestellt:

| | Biegesteife cm | Fadenschluss cm | Abrieb mg |
|---|---|---|---|
| Beisp. 13a: | 27,5 | 16,6 | 0,9 |
| Beisp. 13b: | 24,8 | 16,4 | 1,1 |

*Beispiel 14:*

a) Ein einzelnes Polyester-Filamentgarn vom Titer dtex 50 f 20 wird entsprechend Beispiel 13a)

auf einer Laborschlichtemaschine mit einer Polyesterschlichte geschlichtet, die den nach Beispiel 8 hergestellten Polyester enthält. Der Gesamtauftrag beträgt 2,3%.

Bei der Prüfung ist an der Nähnadel und den Umlenkorganen praktisch kein Abrieb festzustellen, und der Faden läuft einwandfrei.

b) Zum Vergleich wird der Faden mit einem Schlichtemittel behandelt, das aus einem Copolymer (Hauptbestandteile Polyvinylalkohol 60%, Polyvinylacetat 25%, Alkansulfonat 5%) besteht. Der Gesamtauftrag beträgt 3,5%. Beim Abriebtest zeigen sich alsbald starke Aufflusungen, die nach kurzer Zeit zum Fadenbruch führen.

c) Ein einzelnes Polyester-Filamentgarn vom Titer dtex 50 f 20 wird auf einer Laborschlichtemaschine mit einer bekannten Polyesterschlichte, bestehend aus 90 Mol-% Isophthalsäure, 10 Mol-% Sulfoisophthalsäure und 100 Mol-% Diethylenglykol behandelt. Der Gesamtauftrag beträgt 2,3%. Das Laufverhalten in der Weberei ist unbefriedigend. Beim Abriebtest ergeben sich ein schlechter Fadenschluss und zahlreiche Flusen, welche bald zu Fadenbrüchen führen.

## Patentansprüche

1. Polymischester mit einem Fliesspunkt zwischen 220 und 280° C der allgemeinen Formel I

$$E-CO-R-CO-(O-R^1-O-CO-R-CO)_n-E^1 \quad (I)$$

worin

R im statistischen Mittel zu 60 bis 85 Mol-% aus 1,3-Phenylenresten, zu 5 bis 20 Mol-% aus Tetramethylenresten und zu 10 bis 20 Mol-% aus Resten der Formeln IIa und/oder IIb

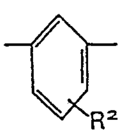 (IIa) 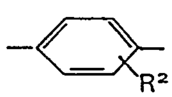 (IIb)

besteht,

$R^1$ im statistischen Mittel zu 60 bis 95 Mol-% aus Ethylenresten ($-CH_2CH_2-$), zu 0 bis 28 Mol-% aus 2,2-Dimethyl-1,3-propylenresten und zu 5 bis 12 Mol-% aus Polyoxyethylenresten mit einem mittleren Molekulargewicht bis 600 besteht, und

$R^2 = SO_3M$ oder $-OCH_2CH_2CH_2SO_3M$,

E, $E^1$ = $-OM$, Alkoxy mit 1 bis 4 C-Atomen oder den Rest $-O-R^1-OH$,

M ein Proton, ein Alkalimetallkation oder Ammonium bedeuten, und

n eine so grosse Zahl ist, dass der Polymischester ein mittleres Molekulargewicht zwischen 15 000 und 40 000 besitzt, wobei die Summe der vorhandenen Dicarbonsäurereste R 100 Mol-% und die Summe der Diolreste $R^1$, bezogen auf die Summe der Reste R, 100 bis 105 Mol-% betragen.

2. Polymischester nach Anspruch 1, dadurch gekennzeichnet, dass R im statistischen Mittel zu 60 bis 80 Mol-% aus 1,3-Phenylenresten, 10 bis 20 Mol-% aus Tetramethylenresten und 10 bis 20 Mol-% aus Resten der Formel IIa besteht.

3. Polymischester nach Anspruch 1 und/oder 2, dadurch gekennzeichnet, dass $R^1$ im statistischen Mittel zu 68 bis 90 Mol-% aus Ethylenresten ($-CH_2-CH_2-$), zu 5 bis 20 Mol-% aus 2,2-Dimethyl-1,3-propylenresten und zu 5 bis 10 Mol-% aus Polyoxyethylenresten mit einem mittleren Molekulargewicht bis 600 besteht.

4. Polymischester nach einem oder mehreren der Ansprüche 1 bis 3, dadurch gekennzeichnet, dass er ein Molekulargewicht zwischen 20 000 und 40 000 besitzt.

5. Polymischester nach einem oder mehreren der Ansprüche 1 bis 4, dadurch gekennzeichnet, dass er einen Fliesspunkt zwischen 230 und 270° C besitzt.

6. Verfahren zur Herstellung der Polymischester eines oder mehrerer der Ansprüche 1 bis 5, dadurch gekennzeichnet, dass 100 Mol-% einer Dicarbonsäurekomponente, bestehend aus 60 bis 85 Mol-% Isophthalsäure und/oder ihren niederen Alkylestern, und 5 bis 20 Mol-% Adipinsäure und/oder ihren niederen Alkylestern und 10 bis 20 Mol-% einer Säure der Formeln Va und/oder Vb

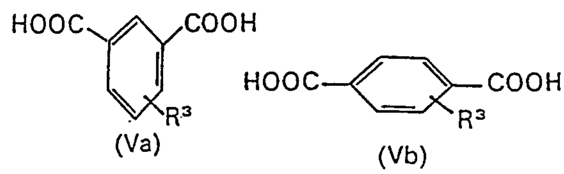

(Va) (Vb)

worin $R^3$ $-SO_3M^1$ oder $-OCH_2CH_2CH_2SO_3M^1$ und $M^1$ ein Alkalimetallkation bedeuten, und/oder ihren niederen Alkylestern mit (bezogen auf 100 Mol-% der Dicarbonsäurekomponente) 120 bis 265 Mol-% einer Diolkomponente, bestehend aus 115 bis 225 Mol-% Ethylenglykol, 0 bis 28 Mol-% Neopentylglykol und 1 bis 12 Mol-% eines oder mehrerer Polyethylenglykole der Formel IV

$$HOCH_2CH_2O-(CH_2CH_2O)_m-CH_2CH_2OH \quad (IV)$$

wobei m eine Zahl von 0 bis 12 ist, bei Temperaturen bis 235° C verestert oder umgeestert und anschliessend bei Temperaturen bis 300° C polykondensiert werden, bis der entstandene Polymischester ein mittleres Molekulargewicht zwischen 15 000 und 40 000 aufweist.

7. Verfahren nach Anspruch 6, dadurch gekennzeichnet, dass so lange polykondensiert wird, bis der entstandene Polymischester ein mittleres Molekulargewicht zwischen 20 000 und 40 000 aufweist.

8. Verfahren nach Anspruch 6 und/oder 7, dadurch gekennzeichnet, dass 100 Mol-% einer Dicarbonsäurekomponente eingesetzt werden, die aus 60 bis 80 Mol-% Isophthalsäure und/oder ihren niederen Alkylestern, 10 bis 20 Mol-% Adipinsäure und/oder ihren niederen Alkylestern und 10 bis 20 Mol-% einer Säure der Formel Va und/oder ihren niederen Alkylestern besteht.

9. Verfahren nach einem oder mehreren der Ansprüche 6 bis 8, dadurch gekennzeichnet, dass,

bezogen auf 100 Mol-% der Dicarbonsäurekomponente, 140 bis 230 Mol-% einer Diolkomponente, bestehend aus 130 bis 190 Mol-% Ethylenglykol, 5 bis 20 Mol-% Neopentylglykol und 5 bis 10 Mol-% Polyethylenglykol der Formel IV, eingesetzt werden.

10. Verfahren nach einem oder mehreren der Ansprüche 6 bis 9, dadurch gekennzeichnet, dass bei Temperaturen von 170 bis 200° C verestert oder umgeestert und bei daran nach oben anschliessenden Temperaturen bis 285° C kondensiert wird.

11. Verwendung eines Polymischesters einer oder mehrerer der Ansprüche 1 bis 5 als Schlichtemittel.

## Claims

1. A polycoester having a flow point between 220 and 280° C of the general formula I

$$E-CO-R-CO\!\left(O-R^1-O-CO-R-CO\right)_{n}E^1 \quad (I)$$

in which

R is on average 60 to 85 mol % 1,3-phenylene radicals, 5 to 20 mol % tetramethylene radicals and 10 to 20 mol % radicals of the formulae IIa and/or IIb

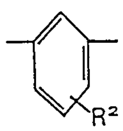 (IIa) 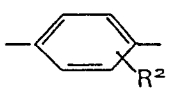 (IIb)

$R^1$ is on average 60 to 95 mol % ethylene radicals ($-CH_2CH_2-$), 0 to 28 mol % 2,2-dimethyl-1,3-propylene radicals and 5 to 12 mol % polyoxyethylene radicals having an average molecular weight up to 600, and

$R^2 = SO_3M$ or $-OCH_2CH_2CH_2SO_3M$,

E, $E^1 = -OM$, alkoxy having 1 to 4 C atoms or the radical $-O-R^1-OH$,

M denotes a proton, an alkali metal cation or an ammonium ion, and

n is a sufficiently large number that the polycoester has an average molecular weight between 15,000 and 40,000, the sum of the dicarboxylic acid ester radicals R present amounting to 100 mol % and the sum of the diol radicals $R^1$, relative to the sum of radicals R, amounting to 100 to 105 mol %.

2. Polycoester as claimed in Claim 1, characterised in that R is on average 60 to 80 mol % 1,3-phenylene radicals, 10 to 20 mol % tetramethylene radicals and 10 to 20 mol % radicals of the formula IIa.

3. Polycoester as claimed in Claims 1 and/or 2, characterised in that $R^1$ is on average 68 to 90 mol % ethylene radicals ($-CH_2-CH_2-$), 5 to 20 mol % 2,2-dimethyl-1,3-propylene radicals and 5 to 10 mol % polyoxyethylene radicals having an average molecular weight of up to 600.

4. Polycoester as claimed in one or more of Claims 1 to 3, characterised in that its molecular weight is between 20,000 and 40,000.

5. Polycoester as claimed in one or more of Claims 1 to 4, characterised in that its flow point is between 230 and 270° C.

6. Process for preparing the polycoester of one or more of Claims 1 to 5, which comprises esterifying or transesterifying 100 mol % a dicarboxylic acid component comprising 60 to 85 mol % isophthalic acid and/or its lower alkyl esters and 5 to 20 mol % adipic acid and/or its lower alkyl esters and 10 to 20 mol % an acid of the formulae Va and/or Vb

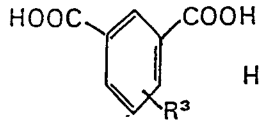

(Va)

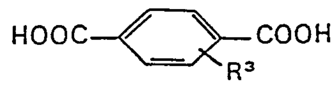

(Vb)

in which $R^3 = -SO_3M^1$ or

$$-OCH_2CH_2CH_2SO_3M^1$$

and $M^1$ denotes an alkali metal cation and/or its lower alkyl ester with (based on 100 mol % the dicarboxylic acid component) 120 to 265 mol % a diol component comprising 115 to 225 mol % ethylene glycol, 0 to 28 mol % neopentyl glycol and 1 to 12 mol % one or more polyethylene glycols of the formula IV

$$HOCH_2CH_2O\!\left(CH_2CH_2O\right)_{m}CH_2CH_2OH \quad (IV)$$

where m is a number from 0 to 12, at temperatures up to 235° C and then polycondensing at temperatures up to 300° C until the polycoester formed has an average molecular weight between 15,000 and 40,000.

7. Process as claimed in Claim 6, characterised in that the polycondensation is continued until the polycoester formed has an average molecular weight between 20,000 and 40,000.

8. Process as claimed in Claims 6 and/or 7, characterised in that 100 mol % a dicarboxylic acid component which is 60 to 80 mol % isophthalic acid and/or its lower alkyl esters, 10 to 20 mol % adipic acid and/or its lower alkyl esters and 10 to 20 mol % an acid of the formula Va and/or its lower alkyl esters are used.

9. Process as claimed in one or more of Claims 6 to 8, characterised in that 140 to 230 mol % diol component comprising 130 to 190 mol % ethylene glycol, 5 to 20 mol % neopentyl glycol and 5 to 10 mol % polyethylene glycol of the formula IV are used per 100 mol % the dicarboxylic acid.

10. Process as claimed in one or more of Claims 6 to 9, characterised in that the esterification or transesterification is carried out at temperatures of 170 to 200° C and the condensation at adjoining upper temperatures up to 285° C.

11. Use of a polycoester of one or more of Claims 1 to 5 as a sizing agent.

## Revendications

1. Copolyesters ayant un point de fluage compris entre 220 et 280° C, de formule générale I ci-dessous:

$$E-CO-R-CO\left(O-R^1-O-CO-R-CO\right)_n E^1 \quad (I)$$

dans laquelle

R représente, en moyenne statistique, de 60 à 85 Mol-% de radicaux 1,3-phénylène, de 5 à 20 Mol-% de radicaux tétraméthylène et de 10 à 20 Mol-% de radicaux de formules IIa et/ou IIb

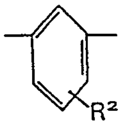 (IIa) 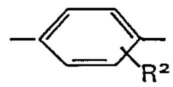 (IIb)

$R^1$ représente, en moyenne statistique, de 60 à 95 Mol-% de radicaux éthylène ($-CH_2CH_2-$), de 0 à 28 Mol-% de radicaux 2,2-diméthyl-2,3-propylène et de 5 à 12 Mol-% de radicaux polyoxyéthyléniques à masse moléculaire moyenne jusqu'à 600,

$R^2$ étant un radical $-SO_3M$ ou $-OCH_2CH_2CH_2SO_3M$,

E et $E^1$ représentent chacun un radical $-OM$, alcoxy en $C_1$ à $C_4$ ou $-O-R^1-OH$,

M désignant un proton, un cation de métal alcalin ou l'ion ammonium, et

n est un nombre tel que le copolyester ait une masse moléculaire moyenne comprise entre 15 000 et 40 000, la somme des radicaux d'acides dicarboxyliques R faisant 100 Mol-% et la somme des radicaux de diols $R^1$, relative à la somme des radicaux R, de 100 à 105 Mol-% de la somme des radicaux R.

2. Copolyesters selon la revendication 1, caractérisés en ce que R est constitué, en moyenne statistique, de 60 à 80 Mol-% de radicaux 1,3-phénylène, de 10 à 20 Mol-% de radicaux tétraméthylène et de 10 à 20 Mol-% de radicaux de formule IIa.

3. Copolyesters selon les revendications 1 et/ou 2, caractérisés en ce que $R^1$ est constitué, en moyenne statistique, pour 68 à 90 Mol-% de radicaux éthylène ($-CH_2-CH_2-$), pour 5 à 20 Mol-% de radicaux 2,2-diméthyl-1,3-propylène et pour 5 à 10 Mol-% de radicaux polyoxyéthyléniques dont la masse moléculaire moyenne peut s'élever jusqu'à 600.

4. Copolyesters selon une ou plusieurs des revendications 1 à 3, caractérisés en ce que leur masse moléculaire est comprise entre 20 000 et 40 000.

5. Copolyester selon une ou plusieurs des revendications 1 à 4, caractérisé en ce qu'il a un point de fluage compris entre 230 et 270° C.

6. Procédé de préparation de copolyesters selon une ou plusieurs des revendications 1 à 5, procédé caractérisé en ce que l'on estérifie ou transestérifie 100 Mol-% d'un composant d'acides dicarboxyliques formé de 60 à 85 Mol-% d'acide isophtalique et/ou d'esters alkyliques inférieurs de cet acide, de 5 à 20 Mol-% d'acide adipique et/ou d'esters alkyliques inférieurs de cet acide, et de 10 à 20 Mol-% d'un acide de formule Va ou Vb ci-dessous ou des deux à la fois (formules dans lesquelles $R^3$ désigne un groupe $-SO_3M^1$ ou $-OCH_2CH_2CH_2SO_3M^1$, $M^1$ étant un cation de métal alcalin), et/ou de leurs esters alkyliques inférieurs, avec (pour 100 Mol-% du composant d'acides dicarboxyliques) de 120 à 265 Mol-% d'un composant de diols formé de 115 à 225 Mol-% d'éthylène-glycol, de 0 à 28 Mol-% de néopentylglycol et de 1 à 12 Mol-% d'un ou de plusieurs polyéthylène-glycols de formule IV

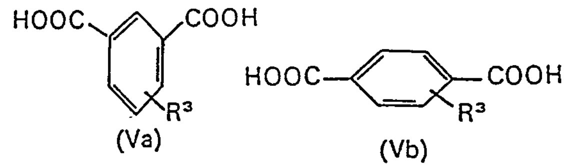
(Va) (Vb)

$$HOCH_2CH_2O\left(CH_2CH_2O\right)_m CH_2CH_2OH \quad (IV)$$

(m étant un nombre de 0 à 12), à des températures allant jusqu'à 235° C, puis on procède à une polycondensation à des températures allant jusqu'à 300° C, jusqu'à ce que le copolyester formé ait une masse moléculaire moyenne comprise entre 15 000 et 40 000.

7. Procédé selon la revendication 6, caractérisé en ce que l'on poursuit la polycondensation jusqu'à ce que le copolyester formé ait une masse moléculaire moyenne comprise entre 20 000 et 40 000.

8. Procédé selon les revendications 6 et/ou 7, caractérisé en ce que l'on met en réaction 100 Mol-% d'un composant d'acides dicarboxyliques formé de 60 à 80 Mol-% d'acide isophtalique et/ou d'esters alkyliques inférieurs de cet acide, de 10 à 20 Mol-% d'acide adipique et/ou d'esters alkyliques inférieurs de cet acide, et de 10 à 20 Mol-% d'un acide de formule Va, ou d'esters alkyliques inférieurs de ces acides.

9. Procédé selon une ou plusieurs des revendications 6 à 8, caractérisé en ce que, pour 100 Mol-% du composant d'acides dicarboxyliques, on met en réaction de 140 à 230 Mol-% d'un composant de diols formé de 130 à 190 Mol-% d'éthylène-glycol, de 5 à 20 Mol-% de néopentylglycol et de 5 à 10 Mol-% d'un polyéthylène-glycol de formule IV.

10. Procédé selon une ou plusieurs des revendications 6 à 9, caractérisé en ce que l'on effectue l'estérification ou la transestérification à des températures de 170 à 200° C, puis la polycondensation en élevant la température jusqu'à 285° C.

11. L'utilisation comme produits d'ensimage des copolyesters qui sont définis aux revendications 1 à 5.